# FASCICULE DE BREVET EUROPEEN

(11) **EP 3 361 746 B1**
(45) Date de publication et mention de la délivrance du brevet: **04.03.2020**
(21) Numéro de dépôt: 18150828.4
(22) Date de dépôt: 09.01.2018
(51) Int. Cl.: H04N 21/6437, H04L 29/08, H04L 29/06, H04L 5/16, H04W 4/10

(54) **SYSTEME DE GESTION DE FLUX MEDIA**
SYSTEM ZUR VERWALTUNG VON MEDIENDATENSTRÖMEN
MEDIA STREAM MANAGEMENT SYSTEM

(30) Priorité: 09.02.2017 FR 1751092
(43) Date de publication de la demande: 15.08.2018
(73) Titulaire: Streamwide, 75010 Paris (FR)
(72) Inventeur: BODILIS, PIERRE, 75019 PARIS (FR)
(74) Mandataire: Plasseraud IP

(56) Documents cités:
- EP-A1- 2 211 587
- US-A1- 2006 047 820
- US-A1- 2007 195 735
- 3GPP DRAFT; OMA-AD-POC_V1_0-20040430-D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CN WG1, no. Zagreb, Croatia; 20040501, 1 mai 2004 (2004-05-01), XP050070695,

## Description

L'invention relève du domaine des communications, en particulier de transmission de flux média via un réseau fonctionnant sous protocole internet.

L'une des problématiques usuelles pour faire transiter des médias du type voix et/ou vidéo via des réseaux fonctionnant sous protocole internet est de réduire au minimum la latence. En effet, un décalage trop important entre l'envoi d'un média par un utilisateur et sa réception par un autre utilisateur nuit à la qualité de la communication à distance et ralentit les échanges. Dans le cas d'une conversation en direct, la latence empêche les interlocuteurs de discuter de manière naturelle, comme s'ils étaient face à face. Des défauts de qualité dans la communication au cours d'une conversation en direct, même temporaires, créent des interruptions immédiatement perceptibles et dommageables.

En outre, établir et maintenir une synchronisation en continu et en temps réel entre deux terminaux implique d'échanger des données en continu. Un tel échange est coûteux et consomme de l'énergie et de la puissance de calcul, ce qui est particulièrement dommageable dans le contexte de terminaux mobiles. De tels problèmes existent dans le contexte de communications point-à-point (impliquant seulement deux interlocuteurs) et deviennent critiques dans le contexte de communications multipoints (ou mode « conférence », soit plus de deux interlocuteurs).

Dans le contexte d'un réseau fonctionnant sous protocole internet, les échanges de médias, notamment la voix et/ou la vidéo, sont généralement assurés par des canaux bidirectionnels simultanés, aussi appelés duplex intégral (« *full-duplex* » en anglais). De manière équivalente, deux canaux unidirectionnels simultanés (« *simplex* » en anglais) et de sens opposés peuvent être utilisés. Pour communiquer, les terminaux doivent être équipés de matériels et de logiciels compatibles, ce qui est complexe et coûteux.

La demanderesse met en œuvre, via des réseaux fonctionnant sous protocole internet, des solutions permettant de mettre en communication plusieurs interlocuteurs les uns avec les autres, notamment plus de deux interlocuteurs concurremment. Chaque terminal est relié à une unité centrale au moyen d'un canal bidirectionnel à l'alternat (ou non simultané), soit un canal monodirectionnel dont le sens alterne. On parle aussi de communication en semi-duplex ou en alternat (« *half-duplex* » en anglais), par opposition au duplex intégral.

Dans une session, soit un ensemble de terminaux souhaitant communiquer les uns avec les autres, la parole est donnée à un seul utilisateur à la fois. Une unité centrale arbitre la prise de parole en l'attribuant alternativement à chacun des utilisateurs la demandant. Le terminal de l'utilisateur ayant la parole fonctionne alors en mode émetteur tandis que les autres terminaux participant à la session fonctionnent en mode récepteur.

Du point de vue des utilisateurs, le fonctionnement rappelle ceux :
- des « *push to talk* », ou « *press to transmit* » (PTT) des talkie-walkie dans le domaine des radiocommunications, ou plus récemment
- des « *push to talk on cellular (PoC)* » dans le domaine des communications par réseaux de téléphonie mobile.

Un exemple est décrit dans le document US 2006/0047820.

Les communications en semi-duplex par réseau fonctionnant sous protocole internet fonctionnent de manière similaire pour une session à deux et à plus de deux interlocuteurs. La demanderesse a ensuite autorisé un utilisateur, via un unique terminal, à se connecter et à participer à plusieurs sessions distinctes en même temps. Le terminal se connecte alors à plusieurs sessions en établissant autant de canaux semi-duplex que de sessions. La quantité de données émises et reçues par le terminal est multipliée par le nombre de sessions, ce qui peut encombrer le réseau, et par exemple saturer le réseau local du terminal. La quantité de données échangées est encore augmentée dans le cas de canaux en duplex intégral.

En outre, les équipements et logiciels usuels de chaque terminal ne sont pas prévus pour fonctionner simultanément sur plusieurs sessions. Par exemple, les logiciels de sécurité combinés aux navigateurs les plus courants demandent une autorisation d'accès au microphone du terminal autant de fois que de sessions à rejoindre. Les sessions multiples ouvertes par l'intermédiaire d'un navigateur d'un terminal sollicitent une importante puissance de calcul pour le processeur du terminal. Ceci entraîne, au mieux, des ralentissements des autres logiciels actifs sur le terminal, et souvent des latences et des coupures. L'expérience utilisateur en devient désagréable. La demanderesse a en outre constaté que les autres participants aux sessions reçoivent un flux média de mauvaise qualité, avec par exemple un son haché et/ou distordu. Sur le réseau, des pertes de paquets et des effets de gigue (« *jitter* » en anglais) sont constatés. D'après les essais de la demanderesse, de tels défauts apparaissent dès qu'un terminal participe à plus de deux sessions simultanées, ce qui n'est pas satisfaisant.

L'invention vient améliorer la situation.

La demanderesse propose un procédé de transmission de média entre un premier terminal et au moins un second terminal parmi une pluralité de seconds terminaux, le premier terminal étant identifié auprès d'une pluralité de serveurs de session tandis que chacun des seconds terminaux est identifié auprès d'au moins un serveur de session parmi ladite pluralité de serveurs de session. Chacun des serveurs de session établit des canaux de communication depuis un terminal vers au moins un autre terminal parmi les terminaux identifiés auprès dudit serveur de session. Le procédé comprend :
- à réception d'un unique flux de média par un serveur mandataire depuis le premier terminal,
- transmettre ledit flux de média depuis le serveur mandataire à l'un au moins des serveurs de session sélectionné parmi ladite pluralité de serveurs de session ;
   et/ou
- à réception d'une pluralité de flux de média issus chacun d'un second terminal par le serveur mandataire depuis une pluralité de serveurs de session,
- transmettre depuis le serveur mandataire au premier terminal un unique flux de média sélectionné parmi la pluralité de flux de média reçus.

Un tel procédé permet de mettre en œuvre un flux média unique, alternativement en émission depuis le premier terminal ou en réception sur le premier terminal. Ainsi, quel que soit le nombre de sessions auxquelles participe l'utilisateur du premier terminal, le flux média peut être traité par les moyens informatiques usuels du premier terminal, sans qu'il soit nécessaire d'en adapter le matériel (« *hardware* ») ou les logiciels *(« software* »). En émission, le flux média est transmis via un unique canal au serveur mandataire, indépendamment de la destination finale ou des destinations finales. Le serveur mandataire transmet ensuite le flux média à chacun des serveurs de session.

Le serveur mandataire peut être distant du premier terminal, par exemple situé sur une partie du réseau agencée pour supporter concurremment plusieurs flux média, tandis que le premier terminal peut être situé sur une partie du réseau aux capacités plus limitées. À l'échelle du premier terminal, la participation à une pluralité de sessions est équivalente à la participation à une unique session. Les logiciels de sécurité demandent un accès au microphone une seule fois, quel que soit le nombre de sessions sur lesquelles l'utilisateur prend la parole. Par exemple, la demanderesse n'a pas constaté de défaut de qualité lorsque le premier terminal est connecté concurremment à quinze sessions.

Selon un autre aspect, la demanderesse propose un système de transmission de média entre un premier terminal et au moins un second terminal parmi une pluralité de seconds terminaux, le premier terminal étant identifié auprès d'une pluralité de serveurs de session tandis que chacun des seconds terminaux est identifié auprès d'au moins un serveur de session parmi ladite pluralité de serveurs de session. Chacun des serveurs de session établit des canaux de communication depuis un terminal vers au moins un autre terminal parmi les terminaux identifiés auprès dudit serveur de session. Le système comprend un serveur mandataire agencé pour :
- à réception d'un unique flux de média, depuis le premier terminal,
- transmettre ledit flux de média à l'un au moins des serveurs de session sélectionné parmi ladite pluralité de serveurs de session ;
   et
- à réception d'une pluralité de flux de média issus chacun d'un second terminal depuis une pluralité de serveurs de session,
- transmettre au premier terminal un unique flux de média sélectionné parmi la pluralité de flux média reçus.

Selon un autre aspect, la demanderesse propose un programme informatique comportant des instructions pour la mise en œuvre du procédé ci-avant, lorsqu'il est mis en œuvre par au moins un processeur d'un serveur mandataire d'un système tel que défini ci-avant.

Les caractéristiques suivantes peuvent, optionnellement, être mises en œuvre. Elles peuvent être mises en œuvre indépendamment les unes des autres ou en combinaison les unes avec les autres :
- Le procédé comprend :
   - à réception d'un unique flux de média associé à des données d'adressage, par un serveur mandataire depuis le premier terminal,
      - sélectionner au moins un des serveurs de session à partir des données d'adressage, par le serveur mandataire, et
      - transmettre ledit flux de média depuis le serveur mandataire à chacun des serveurs de session sélectionnés.

Ceci permet de transmettre un unique flux depuis le premier terminal tout en permettant à l'utilisateur du premier terminal de s'exprimer sur une ou plusieurs sessions à la fois en fonction de ses choix. La charge de travail du premier terminal reste sensiblement équivalente à celle nécessaire pour s'exprimer sur une unique session et les quantités de données qui doivent transiter par le réseau local du premier terminal sont aussi sensiblement équivalentes à celles utilisées pour s'exprimer sur une unique session.
- Le procédé comprend :
   - à réception d'une pluralité de flux de média issus chacun d'un second terminal par le serveur mandataire depuis une pluralité de serveurs de session,
      - transmettre depuis le serveur mandataire au premier terminal un unique flux de média reçu sélectionné parmi la pluralité de flux de média, associé à des données d'identification aptes à identifier la source dudit flux de média sélectionné parmi les serveurs de session et/ou parmi les seconds terminaux.

Ceci permet à l'utilisateur du premier terminal de rester connecté sur plusieurs sessions à la fois tout en recevant un unique flux sur le premier terminal sélectionné en fonction de ses choix. La charge de travail du premier terminal reste sensiblement équivalente à celle nécessaire pour écouter une unique session et les quantités de données qui doivent transiter par le réseau local du premier terminal sont aussi sensiblement équivalentes à celles utilisées pour écouter une unique session. À partir des données d'identification de la source, le premier terminal peut être agencé pour informer l'utilisateur de l'identité de la source du flux média parallèlement à la retransmission du média.
- Le procédé comprend :
   - à réception d'une requête de prise de parole, par le serveur mandataire depuis le premier terminal,
      - transmettre ladite requête à l'un au moins des serveurs de session depuis le serveur mandataire ;
         et/ou
   - à réception d'une autorisation de prise de parole, par le serveur mandataire depuis au moins un serveur de session,
      - transmettre ladite autorisation reçue, depuis le serveur mandataire au premier terminal.

Ceci permet d'utiliser le serveur mandataire comme un intermédiaire pour gérer les prises de parole. Les ressources du premier terminal peuvent être utilisées pour transmettre ou recevoir un flux de média indépendamment du nombre de sessions.
- Le procédé comprend :
   - attendre la réception d'au moins une autorisation de prise de parole par le premier terminal depuis le serveur mandataire, et
   - à réception de ladite autorisation, transmettre le flux de média, depuis le premier terminal vers le serveur mandataire.

Ceci permet de limiter les risques que plusieurs flux média distincts et concomitants soit émis à destination d'une même session, ce qui nuit à la qualité de la communication ou implique de filtrer en aval les flux média reçus.
- L'autorisation est associée à des données d'identification aptes à identifier la source de l'autorisation parmi les serveurs de session, ledit flux de média transmis étant associé à des données d'adressage établies en fonction de la source des au moins une autorisation reçues.

Ceci permet au premier terminal, lors de la transmission du flux, d'indiquer à l'utilisateur du premier terminal une liste de sessions et/ou de seconds terminaux effectivement à l'écoute du premier flux.
- Les canaux de communication sont semi-duplex.

Ceci permet de limiter à chaque instant les ressources nécessaires pour la transmission de flux à un seul sens, et d'éviter la monopolisation de ressources inutiles.
- Le premier terminal et le serveur mandataire sont distants l'un de l'autre et aptes à communiquer l'un avec l'autre via le réseau internet. La gestion du serveur mandataire peut être assurée par une entité différente de l'utilisateur du premier terminal. La plupart des terminaux existants peuvent être rendus compatibles pour former un premier terminal au moyen d'adaptations logicielles mineures. Les performances du serveur mandataire peuvent être adaptées en fonction des besoins, y compris dynamiquement.

D'autres caractéristiques, détails et avantages de l'invention apparaîtront à la lecture de la description détaillée ci-après, et à l'analyse des dessins annexés, sur lesquels :
- la figure 1 montre schématiquement les interconnexions d'éléments appartenant à un système selon l'invention, et
- les figures 2 à 6, équivalentes à la figure 1, représentent chacune une situation d'application d'un procédé selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Du point de vue technique, les contraintes et les caractéristiques des systèmes de radiocommunication et de téléphonie ne sont généralement pas transposables aux communications par des réseaux fonctionnant sous protocole internet (IP). Par conséquent, les références au mode « talkie-walkie » sont utilisées à titre purement illustratif d'un mode de communication en tour-à-tour du point de vue de l'utilisateur.

Dans la suite, on distingue la nature des données échangées en utilisant le terme « média » pour désigner les données portant sur un contenu de média à transmettre et des termes tels que « donnée d'identification » ou « donnée d'adressage » pour désigner des données autres que celles portant sur du contenu média lui-même. Les quantités/tailles des données relatives au contenu média à transmettre sont généralement plus importantes que celles des autres données.

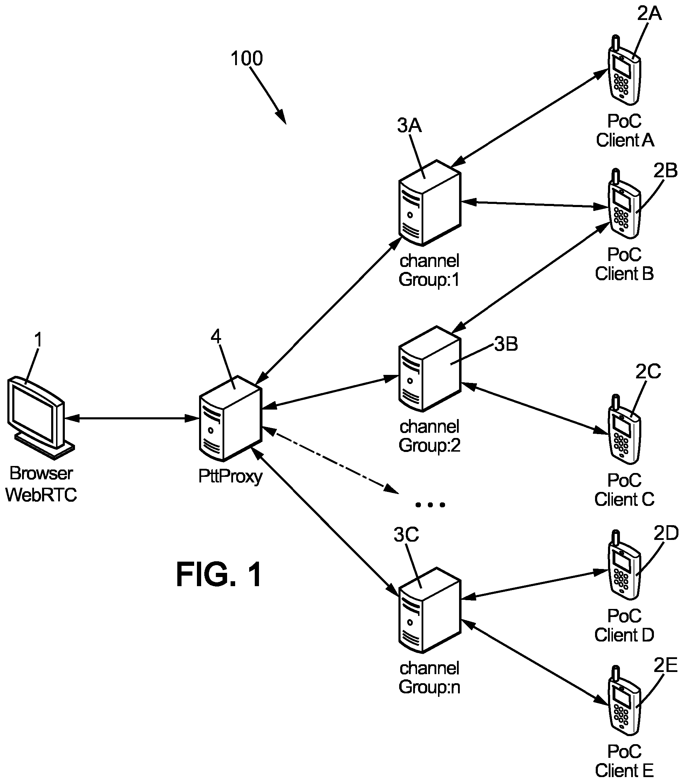

Il est maintenant fait référence à la figure 1 illustrant un mode de réalisation de l'invention. Un système 100 de transmission de média y est représenté. Le système 100 comprend :
- un premier terminal 1 de communication ;
- des seconds terminaux 2A, 2B, 2C, 2D, 2E de communication ;
- des serveurs de session 3A, 3B, 3C ; et
- un serveur mandataire 4.

Dans la suite, la référence 2, respectivement la référence 3, est utilisée pour désigner indistinctement les seconds terminaux 2A, 2B, 2C, 2D, 2E, respectivement les serveurs de session 3A, 3B, 3C.

Dans l'exemple décrit ici, le premier terminal 1 est relié à chacun des serveurs de session 3 par l'intermédiaire d'un unique serveur mandataire 4. Chacun des seconds terminaux 2 est relié directement à un ou plusieurs serveurs de session 3. Par « directement », on entend ici sans qu'un serveur analogue au serveur mandataire 4 ne soit disposé entre le second terminal 2 et le serveur de session 3. Dans l'exemple, le premier terminal 1 est unique. En variante, le système peut comprendre une pluralité de premiers terminaux 1 reliés par un serveur mandataire 4 commun ou respectif. Les termes « premier terminal » et « second terminal » sont utilisés pour distinguer les terminaux reliés aux serveurs de session 3 par l'intermédiaire d'un serveur mandataire 4 de ceux qui ne le sont pas. Pour le reste, les premiers terminaux 1 et les seconds terminaux 2 peuvent être similaires.

Chacun des premiers et seconds terminaux 1, 2 peut comprendre tout dispositif électronique incluant au moins un processeur et des moyens de communication, et apte à se connecter à un réseau fonctionnant sous protocole internet, par exemple un ordinateur, une tablette, ou un smartphone (« smartphone » étant ici équivalent à « ordiphone », ou «téléphone intelligent »). Chaque terminal 1, 2 de communication inclut un système d'exploitation et des programmes, composants, modules, applications sous forme de logiciels exécutés par les processeurs, qui peuvent être stockés dans une mémoire non-volatile.

Ici, chaque terminal 1, 2 est à disposition d'un utilisateur. Chaque terminal peut être assimilé à un utilisateur, chacun des utilisateurs étant supposé distant des autres. Chaque serveur de session 3 est assimilé à une session, ou un groupe d'utilisateurs souhaitant échanger entre eux des flux média.

Par flux média, on vise ici en particulier des données de type audio, et de manière encore plus spécifique de la voix, de sorte que le système 100 puisse être utilisé par les utilisateurs pour tenir des conversations vocales. En variante, le flux média peut comprendre des données de type vidéo ou texte, ou en encore être un flux multimédia et comprendre une combinaison de deux types au moins parmi vidéo, audio et texte. Dans la suite, les termes de « prise de parole » sont utilisés pour désigner de manière générale l'action de monopoliser le rôle d'émetteur de flux média parmi un ensemble de terminaux 1, 2 d'une session, quelle que soit la nature du média.

Sur la figure 1, les serveurs de session 3 et le serveur mandataire 4 sont représentés distincts les uns des autres. Une telle distinction fonctionnelle des serveurs 3, 4 facilite la compréhension. Les serveurs 3, 4 peuvent comprendre des équipements physiques distincts, par exemple distants les uns des autres, et reliés entre eux via un réseau sous protocole internet. En variante, certains au moins des serveurs de session 3 et du serveur mandataire 4 peuvent être au moins en partie communs. Notamment, les serveurs 3, 4 peuvent partager un ou plusieurs processeurs. Chaque serveur 3, 4 peut inclure un système d'exploitation et des programmes, composants, modules, applications sous forme de logiciels exécutés par les processeurs, qui peuvent être stockés dans une mémoire non-volatile. Par exemple, les serveurs de session 3 peuvent être regroupés et/ou gérés par un fournisseur de service et être reliés à internet. Le ou les serveurs mandataires 4 peuvent par exemple être regroupés et/ou gérés par une société cliente du fournisseur de service et être reliés à un réseau intranet de la société cliente, lui-même relié au réseau internet. Le serveur mandataire 4 peut prendre la forme d'une application intermédiaire associée à un navigateur du premier terminal.

Chacune des sessions peut être de courte durée et considérée comme temporaire, ou de longue durée et considérée comme permanente. L'attribution des ressources d'équipements formant serveur de session 3 peut donc être dynamique.

Ici, chaque second terminal 2A, 2C, 2D, 2E est relié à un unique serveur 3, à l'exception du terminal 2B relié à la fois au serveur de session 3A et au serveur de session 3B.

Sur la figure 1, les équipements sont reliés entre eux par des flèches à double sens. Ceci indique qu'une ou plusieurs liaisons de données permettent le transport de données entre les équipements pour établir, contrôler et terminer une session. Les données ne comprennent pas, ici, le flux média. L'échange de données et les transmissions de flux média peuvent être mis en œuvre au moyen de protocoles connus en soit. Par exemple, l'échange de données est mis en œuvre sous « *Session Initiation Protocol (SIP)* ». La transmission des flux est mise en œuvre sous « *Real-time Transport Protocol (RTP) »,* ici complétée par le « *Real-time Transport Control Protocol (RTCP) ».*

Dans un premier temps, l'utilisateur du premier terminal 1 connecte le premier terminal 1 au serveur mandataire 4. Par exemple, après avoir autoriser l'accès au microphone, le navigateur du premier terminal 1 établit un appel sortant unique avec le serveur mandataire 4. Un tel appel peut être mis en œuvre au moyens de techniques connues en tant que telles, par exemple au moyen de technologies de type communication en temps réel pour le web, mieux connue sous le sigle WebRTC pour *« Web Real-Time Communication* ». Une seule connexion par protocole de type TLS est établie depuis le premier terminal 1. Ensuite, le premier terminal 1 envoie, ou reçoit, un unique flux média à la fois. Ici, une connexion dite « SIP over TLS » est mise en œuvre. Le média utilise la pile WebRTC intégrée au navigateur du premier terminal 1 et qui inclut l'émission et la réception de RTP.

Le flux média transite par une première portion de canal semi-duplex entre le premier terminal 1 et le serveur mandataire 4.

Le serveur mandataire 4 transmet l'unique flux média reçu du premier terminal 1 à l'un des serveurs de session 3. De même, le serveur mandataire 4 transmet un unique flux média reçu d'un serveur de session 3 au premier terminal 1 parmi le seul flux média reçu d'un serveur de session 3 ou parmi la pluralité de flux média reçus des serveurs de session 3 respectifs.

Le flux média peut transiter par une deuxième portion de canal semi-duplex entre le serveur mandataire 4 et chacun des serveurs de session 3 concernés. Le flux média peut transiter par une troisième portion de canal semi-duplex entre chaque serveur de session 3 et les seconds terminaux 2 correspondants.

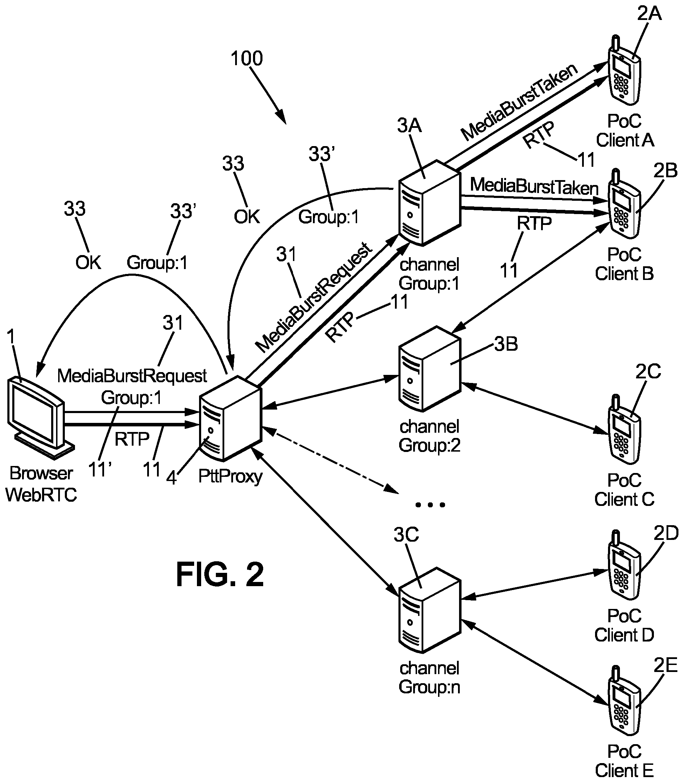

La figure 2 représente un scénario dans lequel l'utilisateur du premier terminal 1 souhaite prendre la parole au sein du groupe correspondant au serveur de session 3A. Autrement dit, l'utilisateur souhaite adresser un média, par exemple sa voix, uniquement aux utilisateurs des seconds terminaux 2A et 2B associés au serveur de session 3A. Pour ce faire, le premier terminal 1 transmet des données sous forme de requête 31, ou message de prise de parole (notée « *MediaBurstRequest* »), au serveur de session 3A, ici par l'intermédiaire du serveur mandataire 4. Une telle requête peut être transmise par exemple par SIP.

Le premier terminal 1 transmet un flux de média 11 au serveur mandataire 4, ici par RTP et sur une portion de canal semi-duplex. À réception du flux de données 11 par le serveur mandataire 4 depuis le premier terminal 1, le serveur mandataire 4 transmet le flux de données 11 à l'un au moins des serveurs de session 3.

Dans l'exemple décrit ici, le premier terminal 1 transmet en outre des données d'adressage 11' au serveur mandataire 4, par exemple sous la forme d'un jeu d'identifiants (« *SessionID* ») des sessions destinataires. De telles données d'adressage 11' peuvent être transmises, par exemple, par SIP. Les données d'adressage 11' sont associées au flux média 11 : les données d'adressage indiquent le(s) destinataire(s) du flux média 11.

À réception du flux de média 11 associé aux données d'adressage 11', le serveur mandataire 4 identifie au moins un des serveurs de session 3 à partir des données d'adressage 11'. Ensuite, le serveur mandataire 4 transmet le flux de média 11 à chacun des serveurs de session 3 identifiés, soit ici uniquement le serveur de session 3A.

Dans des variantes, le serveur mandataire 4 peut être agencé pour identifier des serveurs de session 3 par défaut parmi ceux auprès desquels le terminal 1 est identifié en l'absence de données d'adressage 11'. Par exemple, lorsqu'une unique session est active pour le premier terminal 1, autrement dit lorsque le serveur mandataire 4 est connecté à un unique serveur de session 3, alors le serveur mandataire 4 peut identifier par défaut le seul serveur de session possible parmi ceux auprès desquels le terminal 1 est identifié. Lorsque le premier terminal 1 est identifié auprès de plusieurs sessions, le serveur mandataire 4 peut identifier un unique serveur de session 3 auquel transmettre le flux média 11 en fonction de règles de priorité préétablies, par exemple un ordonnancement des serveurs de session 3 les uns par rapport aux autres. Lorsque le premier terminal 1 est identifié auprès de plusieurs sessions, le serveur mandataire 4 peut aussi identifier, par défaut, l'ensemble des serveurs de session 3 accessibles comme destinataires du flux média 11. Le serveur mandataire 4 peut être configuré de manière à rejeter la demande de transmission de flux du premier terminal 1 lorsque ledit flux est destiné à un serveur de session auprès duquel le premier terminal 1 n'est pas identifié et à renvoyer un message d'erreur au premier terminal 1.

À réception de la requête 31 et si la parole est libre, c'est-à-dire non encore monopolisée par un autre terminal 2A, 2B, le serveur de session 3A accorde la parole au premier terminal 1. Le serveur de session 3A envoie, ici sous SIP :
- en réponse au premier terminal 1, par l'intermédiaire du serveur mandataire 4, des données sous forme d'autorisation 33 pour la prise de parole (« *OK* »), et
- aux autres terminaux 2A, 2B de la session, des données sous forme de message indiquant que la parole est prise (« *MediaBurstTaken*»)*.*

À réception d'une requête 31 de prise de parole depuis le premier terminal 1, le serveur mandataire 4 transmet la requête 31 à l'un au moins des serveurs de session 3. À réception d'une autorisation 33 de prise de parole depuis au moins un serveur de session 3, le serveur mandataire 4 transmet l'autorisation 33 reçue au premier terminal 1.

À réception du flux média 11, le serveur de session 3A transmet le flux média 11 à chacun des autres terminaux de la session, ici les seconds terminaux 2A et 2B. La transmission du flux média 11 est ici réalisée par RTP et sur des portions de canal semi-duplex

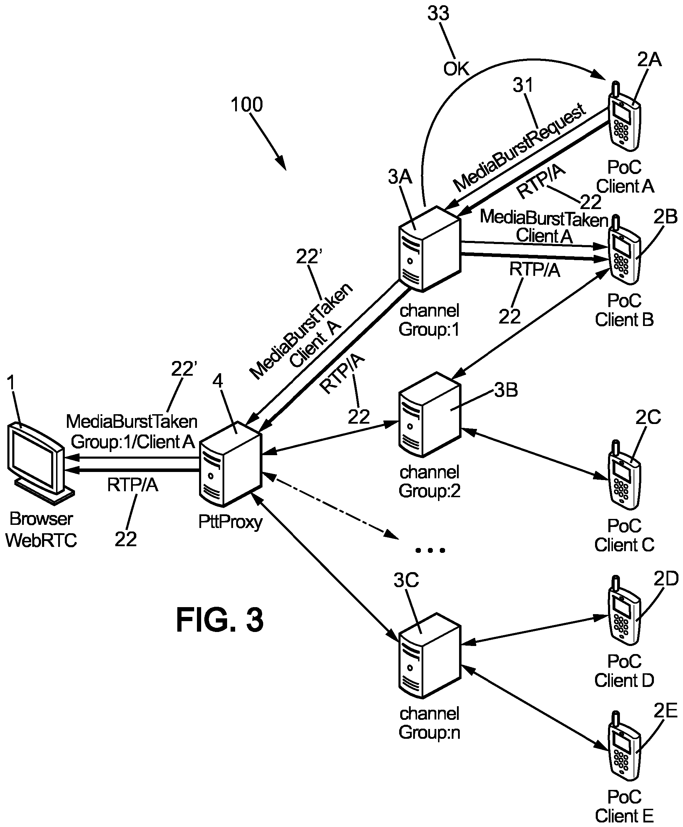

La figure 3 représente un scénario dans lequel l'utilisateur du second terminal 2A souhaite prendre la parole au sein du groupe correspondant au serveur de session 3A, c'est-à-dire s'adresser aux utilisateurs du premier terminal 1 et du second terminal 2B. Le second terminal 2A transmet une requête 31 de prise de parole au serveur de session 3A, ici en SIP.

Le second terminal 2A transmet un flux de média 22 au serveur de session 3A, ici par RTP et sur une portion de canal semi-duplex. À réception du flux de média 22 par le serveur de session 3A depuis le second terminal 2A, le serveur de session 3A transmet à son tour le flux de média 22 au second terminal 2B et au serveur mandataire 4, ici par RTP et sur une portion de canal semi-duplex respective.

À réception du flux de média 22 issu du second terminal 2A depuis le serveur de session 3A, le serveur mandataire 4 transmet le flux de média 22 reçu au premier terminal 1.

Dans l'exemple décrit ici, le second terminal 2A transmet en outre des données d'identification 22' au serveur de session 3A, par exemple sous la forme d'un identifiant du second terminal 2A. En variante, l'identifiant du second terminal 2A est établis par le serveur de session 3A sans qu'il soit nécessaire de le transmettre depuis le second terminal 2A. Le serveur de session 3A transmet les données d'identification 22' comprenant l'identifiant du second terminal 2A et en y adjoignant un identifiant de la session. De telles données d'identification 22' peuvent être transmises, par exemple, par SIP. Les données d'identification 22' sont associées au flux média 22 : les données d'identification 22' indiquent la source du flux média 22.

À réception, le serveur mandataire 4 transmet au premier terminal 1 le flux de média 22 reçu et les données d'identification 22' associées. Les données d'identification 22' sont aptes à identifier la source du flux de média 22 parmi les serveurs de session 3 et parmi les seconds terminaux 2. En variante, les données d'identification 22' comprennent seulement des données aptes à identifier la source du flux de média 22 parmi les serveurs de session 3, ou seulement des données aptes à identifier la source du flux de média 22 parmi les seconds terminaux 2. En variante, les données d'identification 22' sont absentes.

Dans l'exemple décrit ici, la transmission des données d'identification 22', ou signalisation, est réalisée par protocoles superposés SIP et TLS de sorte que la communication est sécurisée par TCP. Dans une étape préalable, le premier terminal 1 est identifié auprès du serveur mandataire 4 au cours d'une demande d'identification auprès d'une session et d'un serveur de session 3 au moyen d'un identifiant et d'un mot de passe temporaire. Le mot de passe temporaire est récupéré par l'utilisateur du premier terminal 1 depuis une base de données, ici par XML-RPC pour améliorer l'interopérabilité des terminaux et serveurs. Les serveurs de session 3 identifient le premier terminal 1 en accédant au mot de passe temporaire sur ladite base de données.

Le premier terminal 1 reste identifié auprès du terminal de session 3 toute la durée de la session, ou tant que la connexion n'est pas interrompue.

Dans l'exemple décrit ici, chacun des serveurs de session 3 établit un canal de communication semi-duplex avec chacun des terminaux identifiés auprès dudit serveur de session 3. Le serveur mandataire 4 établit aussi un canal de communication semi-duplex avec le premier terminal 1. Les canaux de communication sont négociés par SDP à l'établissement de la communication. Les canaux de communication sont statiques. Autrement dit, les canaux de communication semi-duplex utilisés sont constants au cours d'une session entre le premier terminal 1 et un serveur de session 3 et au cours d'une communication entre le premier terminal 1 et un serveur mandataire 4.

En variante, chacun des serveurs de session 3 établit dynamiquement un canal de communication semi-duplex depuis un terminal vers au moins un autre terminal parmi les terminaux identifiés auprès dudit serveur de session 3. Autrement dit, au fil du temps, les canaux de communication semi-duplex utilisés changent, notamment en fonction des prises de parole.

Dans les deux précédents scénarios, le flux de média 11, 22 est transmis indépendamment de l'envoi de la requête 31 de prise de parole. En variante, la source (le premier terminal 1 dans le cas de la figure 2 ou le second terminal 2A dans le cas de la figure 3) attend la réception de l'autorisation 33 de prise de parole. À réception de l'autorisation 33, le flux de média 11, 22 est transmis. L'autorisation 33 peut être associée à des données d'identification 33' aptes à identifier la source de l'autorisation 33 parmi les serveurs de session 3A, 3B, 3C. Ainsi, dans les cas où le serveur mandataire 4 transmet plusieurs demande d'autorisation 31 à plusieurs serveurs de session 3A, 3B, 3C, le serveur mandataire 4 peut identifier en retour les serveurs de session 3A, 3B, 3C pour lesquels une autorisation 33 est donnée. L'utilisateur du premier terminal 1 peut prendre la parole, c'est-à-dire transmettre un média simultanément à chacun des groupes d'utilisateurs pour lesquels une autorisation 33 est reçue. Par exemple, le flux de média 22 transmis depuis le premier terminal 1 est associé à des données d'adressage 11' sélectionnées en fonction de la source de chacune des au moins une autorisation 33 préalablement reçues.

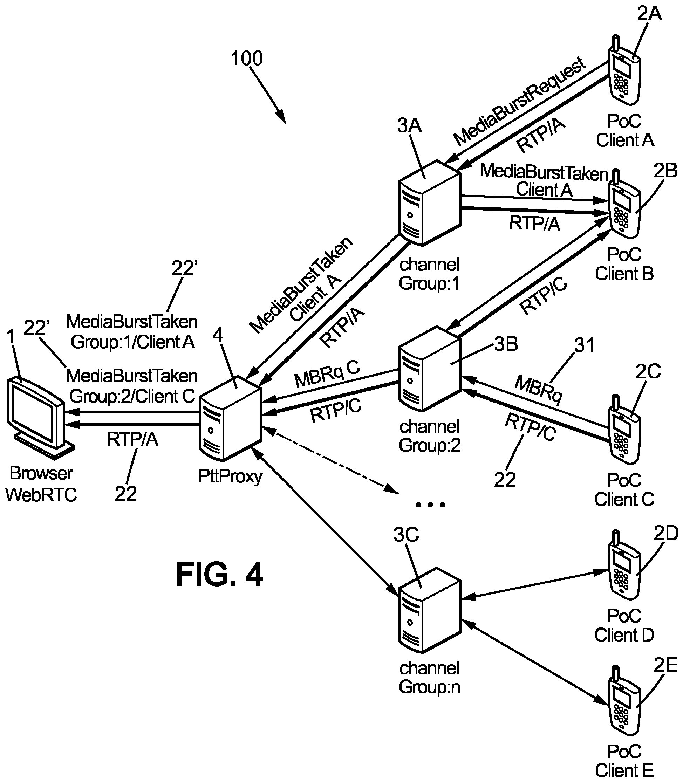

Il est maintenant fait référence à la figure 4. Le scénario est similaire à celui de la figure 3. En outre, l'utilisateur du second terminal 2C émet aussi une requête 31 de prise de parole et obtient en retour une autorisation 33. Ainsi, le second terminal 2A émet un flux de média 22 à destination des utilisateurs du premier groupe correspondant au serveur de session 3A tandis que le second terminal 2C émet un flux de média 22 à destination des utilisateurs du deuxième groupe correspondant au serveur de session 3B. Le serveur mandataire 4 reçoit les deux flux de média 22.

Chacun des flux de média 22 issu d'un second terminal 2A, respectivement 2C, reçu par le serveur mandataire 4 depuis au moins un serveur de session 3A, respectivement 3B, est associé à des données d'identification 22'. Les données d'identification 22' sont aptes à identifier la source du flux de média 22 parmi les serveurs de session 3A, 3B et/ou parmi les seconds terminaux 2A, 2C. Dans l'exemple décrit ici, les données d'identification 22' sont aptes à identifier à la fois le serveur de session 3 émetteur et le second terminal 2 émetteur.

Dans l'exemple décrit ici, en cas de réception d'au moins deux flux de média 22 issus d'au moins un second terminal 2A, 2C depuis au moins deux serveurs de session 3A, 3B, le serveur mandataire 4 est agencé pour sélectionner un unique flux de média 22 parmi les flux de média 22 reçus. La transmission depuis le serveur mandataire 4 au premier terminal 1 est appliquée uniquement au flux de média 22 sélectionné. Autrement dit, le serveur mandataire 4 filtre les flux de média 22 reçus, par exemple pour en transmettre un seul. Ainsi, en fonction des paramétrages du serveur mandataire 4, le premier terminal 1 reçoit un seul flux de média 22 quel que soit le nombre de flux de média 22 reçus par le serveur mandataire 4.

La sélection du flux de média 22 parmi plusieurs par le serveur mandataire 4 peut être effectué par l'application d'un jeu de règles de priorité. Par exemple, l'ordre de priorité des serveurs de session 3 peut correspondre, par défaut, à l'ordre chronologique de connexion du premier utilisateur à chacune des sessions. Un administrateur peut fixer les règles de priorité, lesdites règles étant par exemple stockées sur une base de données accessible au serveur mandataire 4. L'utilisateur peut aussi établir à volonté un ordre de priorité, par exemple par l'intermédiaire du premier terminal 1. L'utilisateur peut aussi sélectionner à la volée le flux média 22 à recevoir parmi ceux disponibles. Le serveur mandataire 4 peut être agencé pour transmettre au premier terminal 1 une liste de sessions actives, c'est-à-dire pour lesquelles l'émission d'un flux de média est en cours. La liste des sessions peut en outre comprendre d'autres informations telles qu'un identifiant du second terminal 2 en cours d'émission sur chaque session. Les règles de priorité peuvent aussi être définies en fonction d'un marqueur temporaire de la prise de parole de chaque flux de média 22, par exemple pour sélectionner en priorité le flux de média 22 correspondant à la plus ancienne prise de parole.

Dans l'exemple de la figure 4, contrairement au premier terminal 1, le second terminal 2B reçoit les deux flux de média 22, l'un par l'intermédiaire du serveur de session 3A, l'autre par l'intermédiaire du serveur de session 3B. Le second terminal 2B est agencé pour sélectionner lequel des deux flux 22 retransmettre à l'utilisateur (via un écran et/ou un haut-parleur par exemple). La sélection peut être définie par un réglage par défaut et/ou effectuée par l'utilisateur qui choisit lequel retransmettre parmi les deux flux média 22.

Dans une variante du scénario de la figure 4, le second terminal 2B prend la parole à la place des seconds terminaux 2A et 2C, à la fois via le serveur de session 3A et le serveur de session 3B. Dans un tel cas, le serveur mandataire 4 est agencé pour sélectionner parmi les deux flux de média 22 de contenus identiques, lequel transmettre au premier terminal 1.

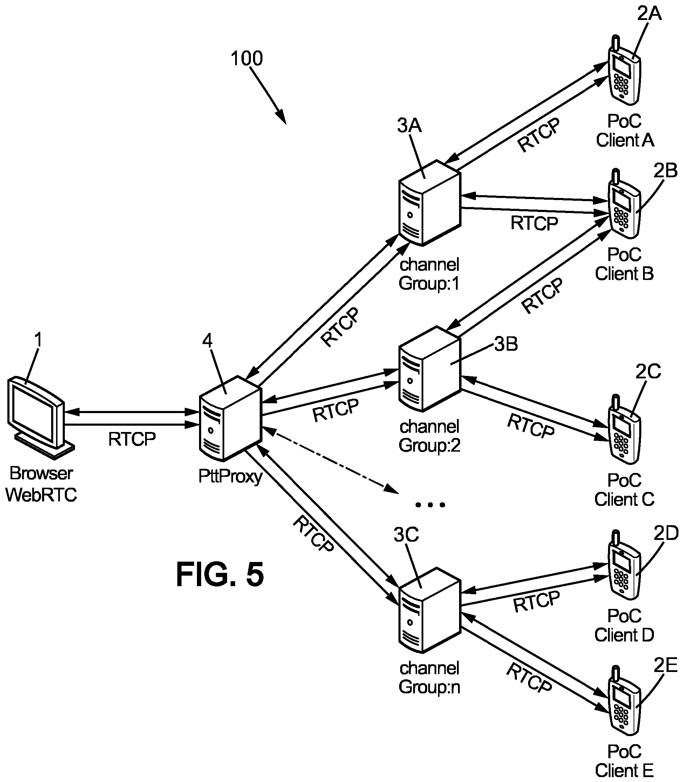

La figure 5 représente l'émission par le premier terminal 1 de données de contrôle. Les données de contrôle prennent, ici, la forme du protocole de contrôle des flux en temps réel, ou RTCP pour « *Real-time Transport Control Protocol* », correspondant au protocole RTP décrit ci-avant. De telles données permettent à chacun des participants d'une session d'obtenir des informations sur les participants à la session et sur la qualité de service.

Les données de contrôle issues du premier terminal 1 sont transmises à chacun des seconds terminaux 2 participant à au moins une session commune avec le premier terminal 1. Une telle transmission est assurée par l'intermédiaire du serveur mandataire 4, et de chacun des serveurs de session 3 correspondant.

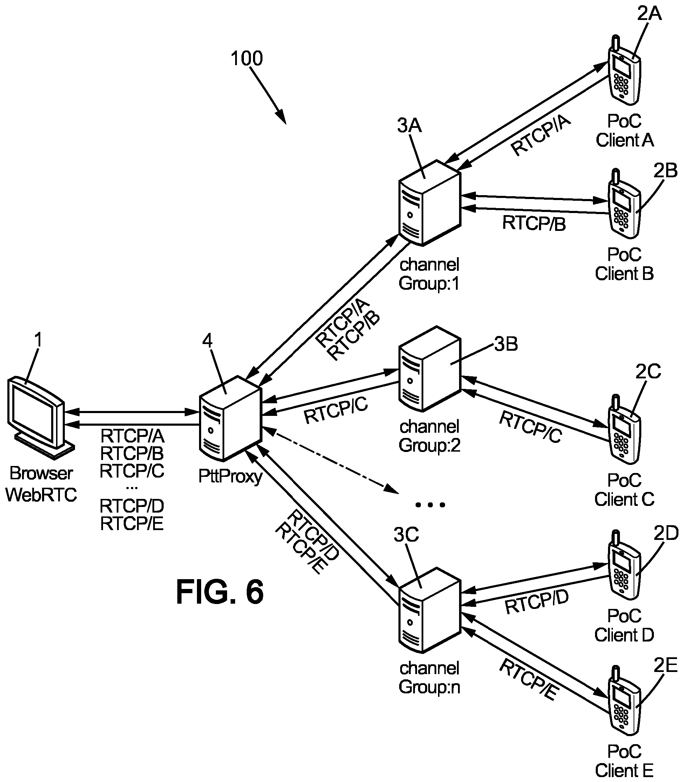

La figure 6 représente l'émission par chacun des seconds terminaux 2 de données de contrôle, ici aussi sous RTCP. Chaque jeu de données de contrôle issu de chacun des seconds terminaux 2 est transmis au premier terminal 1. Une telle transmission est assurée par l'intermédiaire de chacun des serveurs de session 3 correspondant, et du serveur mandataire 4.

Chacun du premier terminal 1 et des seconds terminaux 2 sont en outre agencés pour transmettre un message SIP du type « *MediaBurstRelease* » pour rendre la parole à la fin de la transmission du flux de média 22. À réception d'un tel message, chacun des serveurs de session 3 transmet un message indiquant que la parole est libre à chacun des autres participants à la session, du type « *MediaBurstIdle* ». Dans les situations ou la parole est libre, aucun flux de média 22 n'est transmis entre les participants à la session via le serveur de session 3 correspondant. Dans ce cas, seules des données de contrôle (RTCP) sont échangées, tel que cela est représenté en figures 5 et 6. Le serveur mandataire 4 et/ou les serveurs de session 3 peuvent être agencés pour détecter des déconnexions non préalablement signalées et/ou des rendus de paroles non signalés, et pour émettre dans de tels cas un message indiquant que la parole est libre sans attendre la réception d'un message de la part des terminaux 1, 2 correspondants.

Dans des modes de réalisation, lorsqu'un utilisateur du premier terminal 1 désire rejoindre une session, un message SIP est envoyé depuis le premier terminal 1 jusqu'au serveur de session 3 correspondant, et par l'intermédiaire du serveur mandataire 4. Un tel message peut, par exemple, être envoyé par l'intermédiaire d'un navigateur du premier terminal 1, par exemple après avoir demandé l'accès au microphone du premier terminal 1. Une fois la connexion établie, un message SIP du type « *JoinSession* » est transmis au serveur mandataire 4. Le message SIP peut être accompagné d'un identifiant de la session et de données d'identification et/ou d'authentification de l'utilisateur. Le serveur mandataire 4 authentifie l'utilisateur, puis établie un appel sortant vers le serveur de session 3 correspondant à la session à joindre.

Lorsque la connexion à la session est établie, le serveur mandataire 4 fait office de relai entre le premier terminal 1 et chacun des serveurs de session 3. Le serveur mandataire 4 transmet tous les messages entre l'utilisateur et la session. Lors de la transmission, le serveur mandataire 4 peut modifier le message, par exemple en y ajoutant des données telles que les données d'adressage 11' et/ou les données d'identification 22'. De telles données peuvent prendre la forme d'entêtes (« header » en anglais) du type *« SessionId* » ou « *UserID* ». Dans l'exemple décrit ici, l'identifiant utilisateur comprend un identifiant public de l'utilisateur, par exemple son numéro de téléphone, ou MSISDN pour « *Mobile Station Integrated Services Digital Network ». Les* données peuvent être transmises par RTP. Les messages issus du premier terminal 1 sont transmis à la session correspondant à l'identifiant contenu dans un tel champ. Les messages issus d'un serveur de session 3 sont transmis au premier terminal 1 en ajoutant l'identifiant de la session.

Dans des variantes, d'autres messages peuvent être échangés. Par exemple :
- Un message SIP de type « *QuitSession* » associé à un identifiant de session(s) est envoyé par le premier terminal 1 au serveur mandataire 4 lorsque l'utilisateur souhaite quitter la ou les sessions correspondantes. Dans ces cas, le serveur mandataire 4 transmet à chacun des serveurs de session 3 concernés un message du type *« Bye ».* Chacun des serveurs de session 3 envoie en réponse à chacun des autres terminaux 2 de la session un message du type « *ParticipantLeft »* ;
- Un message SIP de type « *HungUpBySession* » est envoyé par le serveur mandataire 4 au premier terminal 1 lorsque une session raccroche sur le serveur mandataire 4 ;
- Lorsqu'un message SIP de type *« Bye* » est envoyé depuis le premier terminal 1 au serveur mandataire 4, ou qu'une déconnexion entre les deux est détectée, le serveur mandataire 4 transmet à chacun des serveurs de session 3 un message SIP de type *« Bye ».*

Dans des modes de réalisation, le premier terminal 1 et le serveur mandataire 4 sont distants. Le premier terminal 1 et le serveur mandataire 4 communiquent par l'intermédiaire du réseau Internet. Par exemple, le serveur mandataire 4 peut appartenir à un fournisseur de service tandis que le premier terminal 1 appartient à un client du fournisseur de service. Dans une telle configuration, le serveur mandataire 4 peut être assimilé à un point d'accès au service pour l'utilisateur de premier terminal 1, ou « front end ». Le serveur mandataire 4 et les serveurs de session 3 peuvent par exemple communiquer par l'intermédiaire d'un réseau privé géré par le fournisseur de service.

Ainsi, le fournisseur de service peut adapter le réseau privé aux besoins, notamment en fonction des quantités de données et flux à échanger. Le réseau public (ici internet) et le réseau privé local de l'utilisateur du premier terminal 1 doit assurer le transport d'une quantité de données et de flux qui varie peu avec le nombre de connexions simultanées du premier terminal 1. Le risque de saturation du réseau local est réduit. En pratique, des connexions à quinze sessions simultanées n'ont pas permis de détecter de problèmes de qualité de communication.

Usuellement, le terme « proxy », parfois appelé serveur mandataire, désigne un équipement qui fait office de relai entre deux autres équipements. Ici, le serveur mandataire 4 fait office de relai entre le premier terminal 1 et les serveurs de session 3. Le serveur mandataire 4 pourrait donc être appelé « proxy ». Néanmoins, dans le contexte de la transmission de voix par protocole internet (VoIP), il est d'usage de désigner par « proxy » l'équipement qui se contente de relayer uniquement les données (généralement en SIP) permettant d'établir, contrôler et terminer une session, tandis que le flux média (généralement en RTP) ne transite pas par le proxy. Il est à noter que dans le présent contexte, le serveur mandataire 4 relaye le flux de média et optionnellement d'autres données.

Sauf incompatibilité, les différents aspects et caractéristiques décrits ci-dessus peuvent être mis en œuvre ensemble, séparément, ou bien se substituer les uns aux autres. Selon un aspect l'invention peut être vue comme un procédé mise en œuvre par des moyens informatiques. Selon un autre aspect l'invention peut être vue comme un système apte à mettre en œuvre le procédé.

Dans les exemples qui précèdent, chacun des canaux de communication mis en œuvre est semi-duplex. Ceci permet de limiter les quantités de données échangées à chaque instant et donc d'économiser les bandes passantes de chaque partie du réseau. Combiné avec le serveur mandataire, cela permet de limiter les risques de mauvaise qualité de communication. En variante, certains au moins des canaux de communication peuvent être en duplex intégral.

L'invention peut prendre la forme d'un programme informatique comportant des instructions pour la mise en œuvre d'un procédé ou d'une partie des procédés décrits ci-avant lorsqu'il est mis en œuvre par au moins un processeur d'un terminal 1, 2 ou d'un serveur 3, 4.

L'invention ne se limite pas aux exemples de logiciels, procédés et systèmes décrits ci-avant, seulement à titre d'exemple, mais elle englobe toutes les variantes que pourra envisager l'homme de l'art dans le cadre des revendications ci-après.

## Revendications

1. Procédé de transmission de média entre un premier terminal (1) et au moins un second terminal (2A, 2B) parmi une pluralité de seconds terminaux (2A, 2B, 2C, 2D, 2E), le premier terminal (1) étant identifié auprès d'une pluralité de serveurs de session (3A, 3B, 3C) tandis que chacun des seconds terminaux (2A, 2B, 2C, 2D, 2E) est identifié auprès d'au moins un serveur de session (3A ; 3B ; 3C) parmi ladite pluralité de serveurs de session (3A, 3B, 3C),
chacun des serveurs de session (3A ; 3B ; 3C) établissant des canaux de communication depuis un terminal (1 ; 2A, 2B, 2C, 2D, 2E) vers au moins un autre terminal (2A, 2B, 2C, 2D, 2E ; 1) parmi les terminaux (1, 2A, 2B, 2C, 2D, 2E) identifiés auprès dudit serveur de session (3A ; 3B ; 3C),
le procédé comprenant :
- à réception d'un unique flux de média (11) par un serveur mandataire (4) depuis le premier terminal (1),
- transmettre ledit flux de média (11) depuis le serveur mandataire (4) à l'un au moins des serveurs de session (3A ; 3B ; 3C) sélectionné parmi ladite pluralité de serveurs de session (3A ; 3B ; 3C) ;
et/ou
- à réception d'une pluralité de flux de média (22) issus chacun d'un second terminal (2A, 2B, 2C, 2D, 2E) par le serveur mandataire (4) depuis une pluralité de serveurs de session (3A ; 3B ; 3C),
- transmettre depuis le serveur mandataire (4) au premier terminal (1) un unique flux de média (22) sélectionné parmi la pluralité de flux de média (22) reçus ;
le procédé étant en outre **caractérisé en ce que**:
- à réception d'un unique flux de média (11) associé à des données d'adressage (11'), par un serveur mandataire (4) depuis le premier terminal (1),
- sélectionner au moins un des serveurs de session (3A ; 3B ; 3C) à partir des données d'adressage (11'), par le serveur mandataire (4), et
- transmettre ledit flux de média (11) depuis le serveur mandataire (4) à chacun des serveurs de session (3A ; 3B ; 3C) sélectionnés.

2. Procédé selon l'une des revendications précédentes, comprenant en outre :
- à réception d'une pluralité de flux de média (22) issus chacun d'un second terminal (2A, 2B, 2C, 2D, 2E) par le serveur mandataire (4) depuis une pluralité de serveurs de session (3A ; 3B ; 3C),
- transmettre depuis le serveur mandataire (4) au premier terminal (1) un unique flux de média (22) reçu sélectionné parmi la pluralité de flux de média (22), associé à des données d'identification (22') aptes à identifier la source dudit flux de média (22) sélectionné parmi les serveurs de session (3A ; 3B ; 3C) et/ou parmi les seconds terminaux (2A, 2B, 2C, 2D, 2E).

3. Procédé selon l'une des revendications précédentes, comprenant en outre :
- à réception d'une requête (31) de prise de parole, par le serveur mandataire (4) depuis le premier terminal (1),
- transmettre ladite requête (31) à l'un au moins des serveurs de session (3A, 3B, 3C) depuis le serveur mandataire (4) ;
et/ou
- à réception d'une autorisation (33) de prise de parole, par le serveur mandataire (4) depuis au moins un serveur de session (3A, 3B, 3C),
- transmettre ladite autorisation (33) reçue, depuis le serveur mandataire (4) au premier terminal (1).

4. Procédé selon l'une des revendications précédentes, comprenant en outre :
- attendre la réception d'au moins une autorisation (33) de prise de parole par le premier terminal (1) depuis le serveur mandataire (4), et
- à réception de ladite autorisation (33), transmettre le flux de média (11), depuis le premier terminal (1) vers le serveur mandataire (4).

5. Procédé selon la revendication 4, dans lequel l'autorisation (33) est associée à des données d'identification (33') aptes à identifier la source de l'autorisation (33) parmi les serveurs de session (3A, 3B, 3C), ledit flux de média (11) transmis étant associé à des données d'adressage (11') établies en fonction de la source des au moins une autorisation (33) reçues.

6. Procédé selon l'une des revendications précédentes, dans lequel les canaux de communication sont semi-duplex.

7. Système (100) de transmission de média entre un premier terminal (1) et au moins un second terminal (2A, 2B) parmi une pluralité de seconds terminaux (2A, 2B, 2C, 2D, 2E), le premier terminal (1) étant identifié auprès d'une pluralité de serveurs de session (3A, 3B, 3C) tandis que chacun des seconds terminaux (2A, 2B, 2C, 2D, 2E) est identifié auprès d'au moins un serveur de session (3A ; 3B ; 3C) parmi ladite pluralité de serveurs de session (3A, 3B, 3C),
chacun des serveurs de session (3A ; 3B ; 3C) établissant des canaux de communication depuis un terminal (1 ; 2A, 2B, 2C, 2D, 2E) vers au moins un autre terminal (2A, 2B, 2C, 2D, 2E ; 1) parmi les terminaux (1, 2A, 2B, 2C, 2D, 2E) identifiés auprès dudit serveur de session (3A ; 3B ; 3C),
le système comprenant un serveur mandataire (4) agencé pour :
- à réception d'un unique flux de média (11), depuis le premier terminal (1),
- transmettre ledit flux de média (11) à l'un au moins des serveurs de session (3A ; 3B ; 3C) sélectionné parmi ladite pluralité de serveurs de session (3A ; 3B ; 3C) ;
et
- à réception d'une pluralité de flux de média (22) issus chacun d'un second terminal (2A, 2B, 2C, 2D, 2E) depuis une pluralité de serveurs de session (3A ; 3B ; 3C),
- transmettre au premier terminal (1) un unique flux de média (22) sélectionné parmi la pluralité de flux média (22) reçus ;
le serveur mandataire (4) étant en outre **caractérisé en ce que** :
- à réception d'un unique flux de média (11) associé à des données d'adressage (11'), par un serveur mandataire (4) depuis le premier terminal (1),
- sélectionner au moins un des serveurs de session (3A ; 3B ; 3C) à partir des données d'adressage (11'), par le serveur mandataire (4), et
- transmettre ledit flux de média (11) depuis le serveur mandataire (4) à chacun des serveurs de session (3A ; 3B ; 3C) sélectionnés.

8. Système selon la revendication 7, dans lequel le premier terminal (1) et le serveur mandataire (4) sont distants l'un de l'autre et aptes à communiquer l'un avec l'autre via le réseau internet.

9. Programme informatique comportant des instructions pour la mise en œuvre du procédé selon l'une des revendications 1 à 6, lorsqu'il est mis en œuvre par au moins un processeur d'un serveur mandataire (4) d'un système (100) selon la revendication 7.

## Patentansprüche

1. Verfahren zum Übertragen von Mediendaten zwischen einem ersten Endgerät (1) und mindestens einem zweiten Endgerät (2A, 2B) von mehreren zweiten Endgeräten (2A, 2B, 2C, 2D, 2E), wobei das erste Endgerät (1) an mehreren Sitzungsservern (3A, 3B, 3C) identifiziert ist, während jedes der zweiten Endgeräte (2A, 2B, 2C, 2D), 2E) an mindestens einem Sitzungsserver (3A; 3B; 3C) der mehreren Sitzungsserver (3A, 3B, 3C) identifiziert ist,
wobei jeder der Sitzungsserver (3A; 3B; 3C) Kommunikationskanäle von einem Endgerät (1; 2A, 2B, 2C, 2D, 2E) zu mindestens einem anderen Endgerät (2A, 2B, 2C, 2D, 2E; 1) der an dem Sitzungsserver (3A; 3B; 3C) identifizierten Endgeräte (1, 2A, 2B, 2C, 2D, 2E) einrichtet,
wobei Verfahren aufweist:
- beim Empfang eines einzigen Mediendatenstroms (11) aus dem ersten Endgerät (1) an einem Mandatar-Server (4),
- Senden des Mediendatenstroms (11) aus dem Mandatar-Server (4) zu mindestens einem unter den mehreren Sitzungsservern (3A; 3B; 3C) ausgewählten Sitzungsserver (3A; 3B; 3C);
und/oder
- beim Empfang mehrerer aus jeweils einem zweiten Endgerät (2A, 2B, 2C, 2D, 2E) stammender Mediendatenströme (22) aus mehreren Sitzungsservern (3A; 3B; 3C) an dem Mandatar-Server (4),
- Senden eines unter den mehreren empfangenen Mediendatenströmen (22) ausgewählten einzigen Mediendatenstroms (22) aus dem Mandatar-Server (4) zu dem ersten Endgerät (1);
wobei das Verfahren ferner **gekennzeichnet ist durch**:
- beim Empfang eines mit Adressdaten (11') verknüpften einzigen Mediendatenstroms (11) aus dem ersten Endgerät (1) an einem Mandatar-Server (4),
- Auswählen mindestens eines der Sitzungsserver (3A; 3B; 3C) anhand der Adressdaten (11') **durch** den Mandatar-Server (4), und
- Senden des Mediendatenstroms (11) aus dem Mandatar-Server (4) zu jedem der ausgewählten Sitzungsserver (3A; 3B; 3C).

2. Verfahren nach einem der vorstehenden Ansprüche, ferner aufweisend:
- beim Empfang mehrerer aus jeweils einem zweiten Endgerät (2A, 2B, 2C, 2D, 2E) stammender Mediendatenströme (22) aus mehreren Sitzungsservern (3A; 3B; 3C) an dem Mandatar-Server (4),
- Senden eines unter den mehreren Mediendatenströmen (22) ausgewählten einzigen empfangenen Mediendatenstroms (22), der mit Identifikationsdaten (22') verknüpft ist, die fähig sind, die Quelle des ausgewählten Mediendatenstroms (22) unter den Sitzungsservern (3A; 3B; 3C) und/oder unter den zweiten Endgeräten (2A, 2B, 2C, 2D, 2E) zu identifizieren, aus dem Mandatar-Server (4) zu dem ersten Endgerät (1).

3. Verfahren nach einem der vorstehenden Ansprüche, ferner aufweisend:
- beim Empfang einer Anfrage (31), die ein Ergreifen des Worts betrifft, aus dem ersten Endgerät (1) an dem Mandatar-Server (4),
- Senden der Anfrage (31) aus dem Mandatar-Server (4) zu mindestens einem der Sitzungsserver (3A, 3B, 3C);
und/oder
- beim Empfang einer Erlaubnis (33), die das Ergreifen des Worts betrifft, aus mindestens einem Sitzungsserver (3A, 3B, 3C) an dem Mandatar-Server (4),
- Senden der empfangenen Erlaubnis (33) aus dem Mandatar-Server (4) zu dem ersten Endgerät (1).

4. Verfahren nach einem der vorstehenden Ansprüche, ferner aufweisend:
- Warten vonseiten des ersten Endgeräts (1) auf den Empfang mindestens einer Erlaubnis (33), die das Ergreifen des Worts betrifft, aus dem Mandatar-Server (4), und
- beim Empfang der Erlaubnis (33), Senden des Mediendatenstroms aus dem ersten Endgerät (1) zu dem Mandatar-Server (4).

5. Verfahren nach Anspruch 4, in welchem die Erlaubnis (33) mit Identifikationsdaten (33') verknüpft ist, die fähig sind, die Quelle der Erlaubnis (33) unter den Sitzungsservern (3A, 3B, 3C) zu identifizieren, wobei der gesendete Mediendatenstrom (11) mit Adressdaten (11') verknüpft ist, die als Funktion der Quelle der mindestens einen empfangenen Erlaubnis gesetzt sind.

6. Verfahren nach einem der vorstehenden Ansprüche, in welchem die Kommunikationskanäle Semiduplex-Kanäle sind.

7. System (100) zum Übertragen von Mediendaten zwischen einem ersten Endgerät (1) und mindestens einem zweiten Endgerät (2A, 2B) von mehreren zweiten Endgeräten (2A, 2B, 2C, 2D, 2E), wobei das erste Endgerät (1) an mehreren Sitzungsservern (3A, 3B, 3C) identifiziert ist, während jedes der zweiten Endgeräte (2A, 2B, 2C, 2D, 2E) an mindestens einem Sitzungsserver (3A; 3B; 3C) der mehreren Sitzungsserver (3A, 3B, 3C) identifiziert ist,
wobei jeder der Sitzungsserver (3A; 3B; 3C) Kommunikationskanäle von einem Endgerät (1; 2A, 2B, 2C, 2D, 2E) zu mindestens einem anderen Endgerät (2A, 2B, 2C, 2D, 2E; 1) der an dem Sitzungsserver (3A; 3B; 3C) identifizierten Endgeräte (1, 2A, 2B, 2C, 2D, 2E) einrichtet,
wobei das System einen Mandatar-Server (4) aufweist, der konfiguriert ist zum:
- beim Empfang eines einzigen Mediendatenstroms (11) aus dem ersten Endgerät (1),
- Senden des Mediendatenstroms (11) zu mindestens einem unter den mehreren Sitzungsservern (3A; 3B; 3C) ausgewählten Sitzungsserver (3A; 3B; 3C);
und
- beim Empfang mehrerer aus jeweils einem zweiten Endgerät (2A, 2B, 2C, 2D, 2E) stammender Mediendatenströme (22) aus mehreren Sitzungsservern (3A; 3B; 3C),
- Senden eines unter den mehreren empfangenen Mediendatenströmen (22) ausgewählten einzigen Mediendatenstroms (22) zu dem ersten Endgerät (1);
wobei der Mandatar-Server (4) ferner **gekennzeichnet ist durch**:
- beim Empfang eines mit Adressdaten (11') verknüpften einzigen Mediendatenstroms (11) aus dem ersten Endgerät (1) an einem Mandatar-Server (4),
- Auswählen mindestens eines der Sitzungsserver (3A; 3B; 3C) anhand der Adressdaten (11') **durch** den Mandatar-Server (4), und
- Senden des Mediendatenstroms (11) aus dem Mandatar-Server (4) zu jedem der ausgewählten Sitzungsserver (3A; 3B; 3C).

8. System nach Anspruch 7, in welchem das erste Endgerät (1) und der Mandatar-Server (4) voneinander entfernt sind und fähig sind, über das Internet miteinander zu kommunizieren.

9. Informatikprogramm, aufweisend Befehle zum Durchführen des Verfahrens nach einem der Ansprüche 1 bis 6, wenn es von mindestens einem Prozessor eines Mandatar-Servers (4) eines Systems (100) nach Anspruch 7 abgearbeitet wird.

## Claims

1. Method for transmitting media between a first terminal (1) and at least one second terminal (2A, 2B) among a plurality of second terminals (2A, 2B, 2C, 2D, 2E), the first terminal (1) being identified with a plurality of session servers (3A, 3B, 3C) while each of the second terminals (2A, 2B, 2C, 2D, 2E) is identified with at least one session server (3A; 3B; 3C) among said plurality of session servers (3A, 3B, 3C),
each of the session servers (3A; 3B; 3C) establishing communication channels from one terminal (1; 2A, 2B, 2C, 2D, 2E) to at least one other terminal (2A, 2B, 2C, 2D, 2E; 1) among the terminals (1, 2A, 2B, 2C, 2D, 2E) identified with said session server (3A; 3B; 3C),
the method comprising:
- upon reception by a proxy server (4) of a single media stream (11) from the first terminal (1),
- transmitting said media stream (11) from the proxy server (4) to at least one of the session servers (3A; 3B; 3C) selected among said plurality of session servers (3A; 3B; 3C);
and/or
- upon reception by the proxy server (4) of a plurality of media streams, each originating from a second terminal (2A, 2B, 2C, 2D, 2E), from a plurality of session servers (3A; 3B; 3C),
- transmitting, from the proxy server (4) to the first terminal (1), a single media stream (22) selected among the plurality of media streams (22) received ;
the said method further comprising :
- upon reception by a proxy server (4) of a single media stream (11) associated with addressing data (11'), from the first terminal (1),
- selection by the proxy server (4) of at least one of the session servers (3A; 3B; 3C), based on the addressing data (11'); and
- transmission of said media stream (11) from the proxy server (4) to each of the selected session servers (3A; 3B; 3C).

2. Method according to one of the preceding claims, further comprising:
- upon reception by the proxy server (4) of a plurality of media streams each originating from a second terminal (2A, 2B, 2C, 2D, 2E), from a plurality of session servers (3A; 3B; 3C),
- transmitting from the proxy server (4) to the first terminal (1) a single received media stream (22) selected among the plurality of media streams (22), associated with identification data (22') able to identify the source of said selected media stream (22) among the session servers (3A; 3B; 3C) and/or among the second terminals (2A, 2B, 2C, 2D, 2E).

3. Method according to one of the preceding claims, further comprising:
- upon reception by the proxy server (4) of a speaking authorization request (31), from the first terminal (1),
- transmitting said request (31), from the proxy server (4) to at least one of the session servers (3A, 3B, 3C);
and/or
- upon reception by the proxy server (4) of a speaking authorization (33), from at least one session server (3A, 3B, 3C),
- transmitting said received authorization (33), from the proxy server (4) to the first terminal (1).

4. Method according to one of the preceding claims, further comprising:
- waiting to receive at least one speaking authorization (33) from the proxy server (4), for the first terminal (1), and
- upon receiving said authorization (33), transmitting the media stream (11) from the first terminal (1) to the proxy server (4).

5. Method according to claim 4, wherein the authorization (33) is associated with identification data (33') able to identify the source of the authorization (33) among the session servers (3A, 3B, 3C), said transmitted media stream (11) being associated with addressing data (11') established on the basis of the source of the at least one authorization (33) received.

6. Method according to one of the preceding claims, wherein the communication channels are half-duplex.

7. System (100) for transmitting media between a first terminal (1) and at least one second terminal (2A, 2B) among a plurality of second terminals (2A, 2B, 2C, 2D, 2E), the first terminal (1) being identified with a plurality of session servers (3A, 3B, 3C) while each of the second terminals (2A, 2B, 2C, 2D, 2E) is identified with at least one session server (3A; 3B; 3C) among said plurality of session servers (3A, 3B, 3C),
each of the session servers (3A; 3B; 3C) establishing communication channels from a terminal (1; 2A, 2B, 2C, 2D, 2E) to at least one other terminal (2A, 2B, 2C, 2D, 2E; 1) among the terminals (1, 2A, 2B, 2C, 2D, 2E) identified with said session server (3A; 3B; 3C),
the system comprising a proxy server (4) arranged to:
- upon reception of a single media stream (11), from the first terminal (1),
- transmitting said media stream (11) to at least one of the session servers (3A; 3B; 3C) selected among said plurality of session servers (3A; 3B; 3C);
and
- upon reception of a plurality of media streams (22), each originating from a second terminal (2A, 2B, 2C, 2D, 2E), from a plurality of session servers (3A, 3B, 3C),
- transmitting to the first terminal (1) a single media stream (22) selected among the plurality of received media streams (22) ;
The said proxy server (4) being further arranged to:
- upon reception of a single media stream (11) associated with addressing data (11'), by a proxy server (4) from the first terminal (1),
- selection by the proxy server (4) of at least one of the session servers (3A; 3B; 3C), based on the addressing data (11'); and
- transmission of said media stream (11) from the proxy server (4) to each of the selected session servers (3A; 3B; 3C).

8. System according to claim 7, wherein the first terminal (1) and the proxy server (4) are far apart from one another and are able to communicate with each other via the Internet.

9. Computer program comprising instructions for implementing the method according to one of claims 1 to 6, when it is implemented by at least one processor of a proxy server (4) of a system (100) according to claim 7.
